Europäisches Patentamt

European Patent Office

Office européen des brevets

(11) Veröffentlichungsnummer: **0 402 634**
**A1**

## (12) EUROPÄISCHE PATENTANMELDUNG

(21) Anmeldenummer: **90108954.0**

(22) Anmeldetag: **12.05.90**

(51) Int. Cl.5: **A01F 29/20, A01F 29/06**

(30) Priorität: **10.06.89 DE 3919055**

(43) Veröffentlichungstag der Anmeldung:
**19.12.90 Patentblatt 90/51**

(84) Benannte Vertragsstaaten:
**AT BE DE DK FR GB IT NL**

(71) Anmelder: **CLAAS SAULGAU GMBH**
**Postfach 1154**
**D-7968 Saulgau(DE)**

(72) Erfinder: **Rauch, Hans**
**Haus-Nr. 9**
**D-7968 Saulgau-Kleintissen(DE)**
Erfinder: **Gernert, Siegfried**
**Waldseerstrasse 12**
**D-7967 Bad Waldsee(DE)**

(54) **Lagerung und Einstellvorrichtung für die Gegenschneidenschiene von Feldhäckslern.**

(57) Die Erfindung bezieht sich auf die Lagerung und eine Einstellung für die Gegenschneidenschine (13) von Feldhäckslern.

Zur Erzielung einer besonders festen und schwingungsfreien Lagerung wird die Gegenschneidenschine (13) fest mit einem im Maschinengestell schwenkbar gelagerten Sattel (6) verschraubt. Der Sattel (6) ist seinerseits mit reibungsgebremsten Stellgliedern (Hebel 20) verbunden, die manuell oder durch Hilfskraft so verstellt werden können, daß der Sattel (6) samt der Gegenschneidenschienen (13) an die Mantelfläche (1) des Schneidorgans angestellt werden kann.

Ein Teil (18, 19) des Bodens (17, 18) ist mit dem Sattel (6) fest oder gelenkig verbunden und kann dadurch mit an die Mantelfläche (1) angestellt werden.

Fig 1

EP 0 402 634 A1

## Lagerung und Einstellvorrichtung für die Gegenschneidenschiene von Feldhäckslern

Die Erfindung bezieht sich auf eine Lagerung und Einstellvorrichtung für die Gegenschneidenschiene von Feldhäckslern nach dem Oberbegriff des Anspruches 1.

Bei Feldhäckslern dieser Art besteht die Aufgabe, die Gegenschneidenschiene im Betrieb unverrückbar auf einer Auflage festzuhalten, die recht erheblichen Schnittkräfte aufzunehmen und zur Justierung der Gegenschneidenschiene eine einfache, von aussen zu betätigende Einstellmoglichkeit zu schaffen.

In der DE-PS 29 26 538 und der DE-OS 33 02 861 sind zwei verschiedene Ausführungen zur Lösung dieser Aufgabe offenbart worden. In beiden Fällen handelt es sich um Feldhäcksler mit einer in einem Kasten mit Seitenwänden gelagerten Messertrommel und einer zwischen den Seitenwänden fest angebrachten Auflage für eine darauf aufgelegte Gegenschneidenschiene, die an ihren beiden Enden und außerhalb der Seitenwände festgehalten und bis zu einem gewissen Grade verspannt sind. Die Höhe der Verspannung ist dadurch begrenzt, daß die Gegenschneidenschiene zum Justieren verschiebbar bleiben muß. Diese Ausführungen haben den Nachteil, daß die Gegenschneidenschienen sehr kräftig ausgeführt werden müssen, damit sie die beim Schneiden auftretenden Spreizkräfte aufnehmen können, ohne nennenswert elastisch auszuweichen.

Eine andere Schwierigkeit liegt darin, daß die im Bereich der Messertrommel lose aufliegenden und nur außen vorgespannten Gegenschneidenschienen unter dem Einfluß der periodisch wirkenden Schnittkräfte zum Vibrieren neigen, was Nachteile für die Haltbarkeit und die Schnitthaltigkeit hat.

Diese Nachteile können durch die Ausführung nach der Erfindung vermieden und zusätzliche Vorteile erzielt werden. Dies wird dadurch erreicht, daß die Gegenschneidenschiene fest mit einem Sattel verbunden wird, der seinerseits um eine horizontale Achse verschwenkbar ist und dadurch statt durch Verschiebung durch Verschwenkung an die Mantelfläche des Schneidorganes angestellt werden kann. Diese Vorrichtung ist erfindungsgemäß sowohl für Trommelfeldhäcksler, als auch für Scheibenfeldhäcksler anwendbar.

Die Merkmale nach den Ansprüchen 2 - 6 betreffen Ausführungen, die einerseits besonders steif sind und andererseits leicht montierbar sind. Die Merkmale nach den Ansprüchen 7 - 9 ermöglichen eine aus wenig Einzelteilen bestehende Einstellvorrichtung, die besonders spielfrei ist.

Nach Anspruch 10 wird eine für die Funktion des Feldhäckslers wichtige Maßnahme vorgeschlagen. Sie bewirkt, daß der für die Weiterbeförderung des geschnittenen Erntegutes wichtige erste Teil des Bodens um die Messertrommel zusammen mit der Gegenschneidenschiene angestellt wird, wodurch immer ein gerinstmöglicher Spalt zwischen Messertrommel und Boden erzielt wird.

Die Erfindung wird anhand zweier Abbildungen beispielsweise beschrieben.

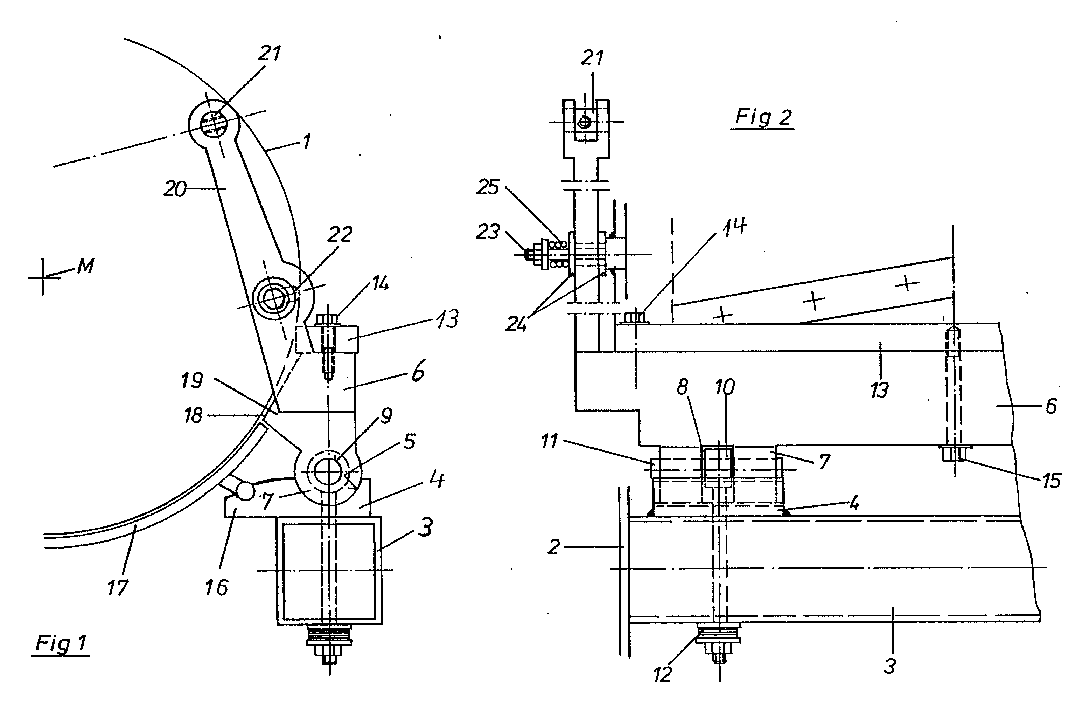

Fig. 1 zeigt eine Vorrichtung nach der Erfindung von der Seite,

Fig. 2 zeigt den gleichen Gegenstand ausschnittsweise in einer Ansicht von vorn.

Eine Messertrommel mit dem Mittelpunkt bei M hat eine Mantelfläche (1). Sie ist beidseits in einer Seitenwand (2) gelagert. Zwischen beiden Seitenwänden (2) erstreckt sich ein gestellfester Querträger (3). In der Nahe der Seitenwände (2) und bedarfsweise auch dazwischen sind auf dem Querträger (3) Auflagen (4) mit konkaven, kreisbogenförmigen Aussparungen (5) befestigt. Ein sich über die ganze Breite der Messertrommel und darüber hinaus bis außerhalb der Seitenwände (2) erstreckender Sattel (6) hat an seiner Unterseite konvex kreisbogenförmige Füße (7), die nach Zahl und Lage mit den Auflagen (4) übereinstimmen. Die Füße (7) sind mit einem Schlitz (8) und einer Querbohrung (9) versehen, deren Mitte mit dem Kreismittelpunkt der Aussparungen (5) und der Fuße (7) übereinstimmt. Eine Ösenschraube (10) ist in den Schlitz (8) eingelegt. Ein Bolzen (11) durchsetzt sowohl die Querbohrung (9), als auch den Kopf der Ösenschraube (10). Die Ösenschraube (10) ist unter Einschaltung eines Tellerfeder-Paketes (12) so mit dem Querträger (3) verschraubt, daß die Füße (7) spielfrei in den Aussparungen (5) liegen, aber darin noch drehbar sind. Eine Gegenschneidenschiene (13) ist an mehreren Stellen (14, 15) mit dem Sattel (6) fest verschraubt. An nasenartigen Ansätzen (16) der Auflagen (4) ist der größere Teil (17) des die Messertrommel umhüllenden Bodens eingehängt oder sonstwie befestigt. Der erste Teil (18) des Bodens wird von einem hornartigen Ansatz (19) des Sattels (6) gebildet oder ist mit diesem anderweitig fest oder gelenkig verbunden.

An den Enden des Sattels (6) sind Hebel (20) fest verbunden. An ihrem Ende haben sie eine Gelenkverbindung mit einem nicht dargestellten Zug- und Druckglied. Dieses kann zum Beispiel eine Schraubspindel oder die Kolbenstange eines hydraulischen Zylinders sein. Der Schenkel des Hebels (20) ist geschlitzt (Schlitz 22). Der Schlitz (22) wird von einem gestellfesten Schraubbolzen (23) durchsetzt. Auf den Schraubbolzen (23) sind Reibscheiben (24) aufgefädelt, die unter der Wirkung einer Druckfeder (25) auf die Seitenflächen des Hebels (20) drucken. Dadurch entsteht eine einstellbare Reibungsbremse, die eine unbeabsichtigte Verstellung des Hebels (20) verhindert.

Wenn das Zug- und Druckglied durch einen hydraulischen Zylinder dargestellt wird, kann die Anpressung der Reibscheiben (24) auch durch hydraulisch gesteuerte Mittel erfolgen.

## Ansprüche

1. Lagerung und Einstellvorrichtung für die Gegenschneidenschiene von Feldhäckslern mit einem Schneidorgan und einem dieses teilweise umhüllenden Boden, bei der die Gegenschneidenschiene auf einem Sattel aufliegt und deren Abstand zu der Mantelfläche des umlaufenden Schneidorgans mittels zweier, außerhalb der Mantelfläche des Schneidorgans gestellfest gelagerter Hebel verändert werden kann, dadurch gekennzeichnet, daß die Gegenschneidenschiene (13) fest mit dem Sattel (6) verbunden ist und daß dieser um eine gestellfeste, zu einer Mantellinie des Schneidorgans parallelen Achse (9, 11) derart verstellbar ist, daß der Sattel (6) samt der Gegenschneidenschiene (13) mit veränderlichem Abstand an die Mantelfläche (1) des Schneidorgans angestellt werden kann.

2. Lagerung und Einstellvorrichtung für die Gegenschneidenschiene von Feldhäckslern nach Anspruch 1, dadurch gekennzeichnet, daß die Höhe des Sattels (6) erheblich größer ist, als die Dicke der Gegenschneidenschiene (13).

3. Lagerung und Einstellvorrichtung für die Gegenschneidenschiene von Feldhäckslern nach den Ansprüchen 1 und 2, dadurch gekennzeichnet, daß ein gestellfester Querträger (3) konkave oder konvexe kreisbogenförmige Auflagen (4) besitzt, auf denen der Sattel (6) mit seiner kreisbogenförmig geformten Unterseite (Füße 7) drehbar gelagert ist.

4. Lagerung und Einstellvorrichtung für die Gegenschneidenschiene von Feldhäckslern nach den Ansprüchen 1 - 3, dadurch gekennzeichnet, daß die Schwenkachse für den Sattel (6) durch die Mittellinie einer sich durch den Sattel (6) erstreckenden Querbohrung (9) bestimmt wird, die von einem Achsbolzen (11) durchsetzt wird.

5. Lagerung und Einstellvorrichtung für die Gegenschneidenschiene von Feldhäckslern nach Anspuch 4, dadurch gekennzeichnet, daß der Achsbolzen (11) mittels Ösenschrauben (10) oder dergleichen mit dem Querträger (3) derart verbunden ist, daß die kreisbogenförmig geformte Unterseite (Füße 7) des Sattels (6) gegen die kreisbogenförmigen Auflagen (4) des Querträgers (3) gehalten ist.

6. Lagerung und Einstellvorrichtung für die Gegenschneidenschiene von Feldhäckslern nach Anspruch 5, dadurch gekennzeichnet, daß die Ösenschrauben (10) oder dergleichen durch elastische Zwischenlagen oder Federn (12) eine dosierbare Anpassung der Unterseite (7) des Sattels (6) gegen die kreisbogenförmigen Auflagen (4) des Querträgers (3) bewirken.

7. Lagerung und Einstellvorrichtung für die Gegenschneidenschiene von Feldhäckslern nach einem der Ansprüche 1 - 6, dadurch gekennzeichnet, daß an einem oder an beiden Enden des Sattels (6) Stellglieder (20) angreifen, die eine manuelle oder hilfskraftgesteuerte Verschwenkung des Sattels (6) um seine Querachse (9, 11) bewirken.

8. Lagerung und Einstellvorrichtung für die Gegenschneidenschiene von Feldhäckslern nach Anspruch 7, dadurch gekennzeichnet, daß die Stellglieder (20) einerseits fest mit dem Sattel (6) verbunden sind und andererseits mit einem längenveränderlichen, am Gestell abgestützten Zug- und Druckglied verbunden sind.

9. Lagerung und Einstellvorrichtung für die Gegenschneidenschiene von Feldhäckslern nach den Ansprüchen 7 und 8, dadurch gekennzeichnet, daß die Bewegung der Stellglieder (20) durch Reibungsbremsen (23, 24, 25) derart eingeschränkt wird, daß der Sattel (6) samt der Gegenschneidenschiene (13) im Betrieb in ihrer Lage festgehalten werden.

10. Lagerung und Einstellvorrichtung für die Gegenschneidenschiene von Feldhäckslern nach den Ansprüchen 1 - 9, dadurch gekennzeichnet, daß ein Teil (18, 19) des das Schneidorgan umhullenden Bodens (17, 18) fest oder gelenkig mit dem Sattel (6) derart verbunden ist, daß sich dieser Teil (18, 19) des Bodens (17, 18) beim Anstellen der Gegenschneidenschiene (13) gegen die Mantelfläche (1) des Schneidorgans ebenfalls der Mantelfläche (1) nähert.

11. Lagerung und Einstellvorrichtung für die Gegenschneidenschiene von Feldhäckslern nach Anspruch 9, dadurch gekennzeichnet, daß die Reibungsbremse (23, 24) durch hydraulische Mittel angespannt oder gelöst wird.

Fig 1

Fig 2

EP 0 402 634 A1

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| X | FR-A-2559992 (HESSTON CORPORATION) <br> * Seite 4, Zeile 5 - Seite 5, Zeile 1 * | 1, 2 | A01F29/20 <br> A01F29/06 |
| A | * Seite 5, Zeile 27 - Seite 6, Zeile 4 * <br><br> * Seite 9, Zeilen 14 - 30 * <br> * Seite 10, Zeilen 6 - 28 * <br> * Ansprüche 1, 4 * <br> --- | 3, 4, 7, 8 | |
| A | GB-A-2025205 (DEERE) <br> * Anspruch 1 * | 1, 8 | |
| D | & DE-A-2926538 <br> --- | | |
| A | FR-A-2588153 (MENGELE) <br> * Seite 2, Zeile 22 - Seite 3, Zeile 2 * <br> --- | 9, 11 | |
| A | GB-A-2168241 (KOMBINATT FORTSCHRITT LANDMASCHINEN NEUSTADT) <br> --- | | |
| A | US-A-3876159 (KIDD) <br> ----- | | |

RECHERCHIERTE SACHGEBIETE (Int. Cl.5 )

A01F

Der vorliegende Recherchenbericht wurde für alle Patentansprüche erstellt

| Recherchenort | Abschlußdatum der Recherche | Prüfer |
|---|---|---|
| DEN HAAG | 28 SEPTEMBER 1990 | DE LAMEILLIEURE D. |

EPO FORM 1503 03.82 (P0403)

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
................................................................
& : Mitglied der gleichen Patentfamilie, übereinstimmendes Dokument